# EUROPEAN PATENT APPLICATION

(11) **EP 4 682 208 A1**
(43) Date of publication of application: **21.01.2026**
(21) Application number: 24770521.3
(22) Date of filing: 28.02.2024
(51) Int. Cl.: C08L 101/00, C08J 3/215, C08K 5/092, C08K 7/02, C08K 9/06, C08L 1/02, C08L 23/26, C08L 77/00

(54) **RESIN COMPOSITION AND METHOD FOR PRODUCING SAME**

(30) Priority: 16.03.2023 JP 2023042108
(71) Applicant: Panasonic Intellectual Property Management Co., Ltd., Kadoma-shi, Osaka 571-0057 (JP)
(72) Inventor: TOYOTA, Kei, Kadoma-shi, Osaka 571-0057 (JP); SEKI, Ryouhei, Kadoma-shi, Osaka 571-0057 (JP); FUKU, Ami, Kadoma-shi, Osaka 571-0057 (JP); IMANISHI, Masayoshi, Kadoma-shi, Osaka 571-0057 (JP); ANDO, Kota, Kadoma-shi, Osaka 571-0057 (JP)
(74) Representative: Novagraaf International SA
(86) International application number: PCT/JP2024/007244
(87) International publication number: WO 2024/190409

(57) **Abstract**

A resin composition includes an organic fibrous filler and a thermoplastic resin, the thermoplastic resin and the organic fibrous filler being chemically bonded to each other, in which a chemical bond between the thermoplastic resin and the organic fibrous filler includes a carbonyl group that is not based on the thermoplastic resin.

## Description

### TECHNICAL FIELD

The present disclosure relates to a resin composition containing an organic fibrous filler and a thermoplastic resin as raw materials and excellent in strength and in environmental compatibility, and a method for producing the same.

### BACKGROUND ART

As environmental problems become more serious on a global scale such as climate warming and marine pollution, energy generation by combustion of fossil fuels and use of products such as plastics using fossil fuels as raw materials have been reconsidered, and realization of a decarbonized society has become a major issue for the whole society. In particular, reducing the use of fossil fuel-derived plastics and replacing them with bio-derived resources as much as possible directly leads to reducing the use of fossil fuels. In addition, when the bio-derived resources can be decomposed in nature, it is expected to contribute to prevention of marine pollution and the like. When the resources are derived from the present living things, combustion treatment as final disposal causes no change in the carbon amount in the biosphere, and the increase in greenhouse gases such as carbon dioxide in the atmosphere is also suppressed.

Under such a background, the technique of using plastics containing a plant-derived cellulose fiber to reduce the use of fossil fuels will become more important in the future.

For example, PTL 1 discloses a method of dispersing a resin and cellulose in water as a solvent under heating, followed by removing water, to obtain a mixture of the resin and the cellulose. As a method for mixing highly hydrophobic polypropylene with cellulose having a hydrophilic surface, PTL 2 discloses a method of forming a composite of a carboxy-methylated cellulose fiber with a polymer having an amino group, an acid-modified polyolefin resin, or the like. Among thermoplastic resins, so-called engineering plastics having excellent strength, such as a polyamide, are particularly poor in wettability with cellulose, and are difficult to form a composite therewith. In PTL 4, a composite is formed from a polyamide and a cellulose fiber with a polyphenylene ether added thereto to promote a homogeneous composite and increase the strength. PTL 5 discloses that a cellulose fiber is increased in heat resistance by acetylating hydroxyl groups on the surface of the cellulose fiber, and is increased in strength by protecting the cellulose fiber from damage due to heating when a composite is formed.

### Citation List

### Patent Literature

PTL 1: Unexamined Japanese Patent Publication No. 2019-43976
PTL 2: WO 2014/087767 A1
PTL 3: Unexamined Japanese Patent Publication No. 2004-58562
PTL 4: WO 20211080010 A1
PTL 5: Unexamined Japanese Patent Publication No. 2021-187885

### SUMMARY OF THE INVENTION

Although it has been known that a composite is formed from a cellulose fiber and a resin as described above, there is limitation in improving strength even when wettability is improved at the interface between the resin and the cellulose fiber or even when the cellulose fiber is increased in heat resistance. For example, in the method of improving wettability, the cellulose fiber and the thermoplastic resin are physically mixed, and the gap at the interface between the cellulose fiber and the thermoplastic resin is reduced by improving wettability. However, when a slight gap remains, the gap serves as a starting point of microcracks leading to fracture when stress is applied, and may cause a decrease in strength. Even when the cellulose fiber is increased in strength by heat resistance, it is only prevented that the cellulose fiber is oxidized and degraded to have a lower molecular weight when thermally melted and kneaded and a gap is generated between the generated oxide and the thermoplastic resin. Also in this case, a slightly remaining gap causes fracture. From the above, it is necessary to further increase the strength when a composite of a resin and a cellulose fiber is applied to automobiles and the like.

The present disclosure has been made as a result of earnest efforts by the inventors in view of the above points, and an object of the present disclosure is to provide a resin composition containing an organic fibrous filler and a thermoplastic resin as raw materials and excellent in strength and in environmental compatibility.

A resin composition according to the present disclosure includes an organic fibrous filler and a thermoplastic resin, the thermoplastic resin and the organic fibrous filler being chemically bonded to each other, in which a chemical bond between the thermoplastic resin and the organic fibrous filler includes a carbonyl group that is not based on the thermoplastic resin.

A method for producing a resin composition according to the present disclosure includes: a step of powder-mixing a thermoplastic resin, an organic fibrous filler, and a maleic anhydride structure-containing additive agent to obtain a powder mixture; and a step of thermally melting, and simultaneously stirring and kneading, the powder mixture to obtain a resin composition.

Another method for producing a resin composition according to the present disclosure includes: a step of powder-mixing an organic fibrous filler and an epoxy group-containing alkoxysilane to produce an epoxy group-modified organic fibrous filler; a step of powder-mixing a thermoplastic resin, the epoxy group-modified organic fibrous filler, and a maleic anhydride structure-containing additive agent to obtain a powder mixture; and a step of thermally melting, and simultaneously stirring and kneading, the powder mixture to obtain a resin composition.

The resin composition according to the present disclosure is formed by blending a thermoplastic resin, an organic fibrous filler, and a maleic anhydride structure-containing additive agent in a predetermined amount, powder-mixing the blend, and thermally melting and stirring or thermally melting and kneading the powder mixture. Through thermally melting and stirring or thermally melting and kneading, the maleic anhydride structure in the maleic anhydride structure-containing material is ring-opened, and the ring-opened portion is bonded to each of a functional group in the plastic resin and a hydroxy group on the organic fibrous filler, thereby constituting an ester structure. When the organic fibrous filler and the thermoplastic resin are chemically bonded through the ester structure, a three-dimensional crosslinked structure can be formed between the thermoplastic resin and the organic fibrous filler to obtain a resin composition with high strength.

### BRIEF DESCRIPTION OF THE DRAWINGS

Fig. 1 is a view showing an AFM image of a resin composition in Example 1.
Fig. 2 is a view showing an AFM-IR measurement spectrum of a resin composition in Example 1.
Fig. 3 is a view showing an example of AFM image of a resin composition in Comparative Example 1.
Fig. 4 is a view showing an AFM-IR measurement spectrum of a resin composition in Comparative Example 1.
Fig. 5 is Table 1, showing the parts by weight of each raw material and evaluation results in Examples 1 to 8.
Fig. 6 is Table 2, showing the parts by weight of each raw material and evaluation results in Examples 9 to 15 and Comparative Example.

### DESCRIPTION OF EMBODIMENT

A resin composition according to a first aspect of the present disclosure includes an organic fibrous filler and a thermoplastic resin, the thermoplastic resin and the organic fibrous filler being chemically bonded to each other, in which a chemical bond between the thermoplastic resin and the organic fibrous filler includes a carbonyl group that is not based on the thermoplastic resin.

A resin composition according to a second aspect of the present disclosure is the resin composition in the first aspect, in which the carbonyl group may be a part of an ester bond.

A resin composition according to a third aspect of the present disclosure is the resin composition in the first or second aspect, in which the organic fibrous filler may be a cellulose fiber.

A resin composition according to a fourth aspect of the present disclosure is the resin composition in the third aspect, in which the cellulose fiber may be included in a weight content of 30 wt% or more and 90 wt% or less in the entire resin composition.

A resin composition according to a fifth aspect of the present disclosure is the resin composition in any one of the first to fourth aspects, in which the thermoplastic resin may be a polyamide.

A method for producing a resin composition according to a sixth aspect of the present disclosure includes: a step of powder-mixing a thermoplastic resin, an organic fibrous filler, and a maleic anhydride structure-containing additive agent to obtain a powder mixture; and a step of thermally melting, and simultaneously stirring and kneading, the powder mixture to obtain a resin composition.

A method for producing a resin composition according to a seventh aspect of the present disclosure is the method in the sixth aspect, in which in the step of obtaining a resin composition, the maleic anhydride structure-containing additive agent may undergo ring-opening of a maleic anhydride structure to induce a reaction that generates a chemical bond having an ester bond including a carbonyl group between the thermoplastic resin and the organic fibrous filler.

A method for producing a resin composition according to an eighth aspect of the present disclosure includes: a step of powder-mixing an organic fibrous filler and an epoxy group-containing alkoxysilane to produce an epoxy group-modified organic fibrous filler; a step of powder-mixing a thermoplastic resin, the epoxy group-modified organic fibrous filler, and a maleic anhydride structure-containing additive agent to obtain a powder mixture; and a step of thermally melting, and simultaneously stirring and kneading, the powder mixture to obtain a resin composition.

A method for producing a resin composition according to a ninth aspect of the present disclosure is the method in the eighth aspect, in which in the step of obtaining a resin composition, the maleic anhydride structure-containing additive agent may undergo ring-opening of a maleic anhydride structure to induce a reaction that generates a chemical bond having an ester bond including a carbonyl group between the thermoplastic resin and the epoxy group-modified organic fibrous filler.

Hereinafter, the resin composition according to an exemplary embodiment of the present disclosure and the method for producing the same will be described in detail.

### (First exemplary embodiment)

### <Resin composition>

The resin composition of the first exemplary embodiment includes an organic fibrous filler and a thermoplastic resin, the thermoplastic resin and the organic fibrous filler being chemically bonded to each other. The chemical bond between the thermoplastic resin and the organic fibrous filler includes a carbonyl group that is not based on the thermoplastic resin. Specifically, the carbonyl group is, for example, a part of an ester bond. The organic fibrous filler is, for example, a cellulose fiber. The cellulose fiber is included in a weight content of, for example, 30 wt% or more and 90 wt% or less in the entire resin composition. The thermoplastic resin may be, for example, a polyamide.

### <Method for producing resin composition>

A method for producing a resin composition according to the present disclosure includes:
(A) a step of powder-mixing a thermoplastic resin, an organic fibrous filler, and a maleic anhydride structure-containing additive agent to obtain a powder mixture; and
(B) a step of thermally melting, and simultaneously stirring and kneading, the powder mixture to obtain a resin composition.

Another method for producing a resin composition according to the present disclosure includes:
(A0) a step of powder-mixing an organic fibrous filler and an epoxy group-containing alkoxysilane to produce an epoxy group-modified organic fibrous filler;
(A1) a step of powder-mixing a thermoplastic resin, the epoxy group-modified organic fibrous filler, and a maleic anhydride structure-containing additive agent to obtain a powder mixture; and
(B) a step of thermally melting, and simultaneously stirring and kneading, the powder mixture to obtain a resin composition.

### <Step of obtaining powder mixture A and A1>

The step of obtaining a powder mixture is a step of physically mixing a pellet-like thermoplastic resin, an organic fibrous filler, and a maleic anhydride structure-containing material that is, for example, a powder to obtain a physical mixture (powder mixture).

### <Step of obtaining resin composition B>

The step of obtaining a resin composition is a production process of heating and simultaneously kneading the physical mixture (powder mixture), for example, using an apparatus capable of thermally melting and mixing the mixture, such as a uniaxial kneader, a biaxial kneader, or a Banbury mixer. In the thermally melting process, for example, a terminal functional group or a part of a skeleton structure of the resin and an active site generated by ring-opening of the maleic anhydride structure react with each other so that the resin and the maleic anhydride structure-containing material are bonded to each other; and a hydroxyl group present on the surface of the organic fibrous filler and an active site generated by ring-opening of the maleic anhydride structure-containing material react with each other to form a chemical bond between the organic fibrous filler and the maleic anhydride structure. When a plurality of maleic anhydride structures is present in the maleic anhydride structure-containing material, a maleic anhydride structure other than the maleic anhydride structure bonded to the resin reacts with the organic fibrous filler so that the organic fibrous filler and the thermoplastic resin are chemically bonded with each other through a carbonyl group in an ester bond derived from the maleic anhydride structure.

Hereinafter, the method for producing a resin composition will be described in detail.

### (1) Raw material

### <Thermoplastic resin>

Among the raw materials in the method for producing a resin composition according to the present disclosure, the thermoplastic resin is not limited as long as it is thermally melted and deformed by heating and can be mixed with not only an organic fibrous filler but also a glass filler, a glass fiber, and other inorganic fillers. The thermoplastic resin may be a mixture of two or more thermoplastic resins. Examples of the thermoplastic resin include, but are not limited to, polyethylene, polyvinyl chloride, polypropylene, polystyrene, acrylonitrile-butadiene-styrene, acrylonitrile-styrene, polymethyl methacrylate, polybutylene terephthalate, polyethylene terephthalate, polyamide, polyoxymethylene, polyvinyl alcohol, polyphenylene ether, polycarbonate, polyphenylene sulfide, aromatic polyether ketone, and polyimide. In particular, the softening temperature is preferably 150°C or higher and 250°C or lower from the viewpoint of the easiness in thermal melting during production and thermal stability during use. Furthermore, the thermoplastic resin is preferably reactive with a chemically active site generated by ring-opening of maleic anhydride, and from this viewpoint, preferably has an amino group, a hydroxyl group, a carboxyl group, a thiol group, an ester structure, an amide structure, a urea structure, an amine structure, or a cyano structure. From the above viewpoint, in the present disclosure, the thermoplastic resin is particularly preferably a polyamide and a polyester. Particularly preferable examples thereof include polybutylene terephthalate, polyethylene terephthalate, and nylon 6 and nylon 66, each of which is a polyamide.

### <Organic fibrous filler>

As the organic fibrous filler, a known organic fibrous filler derived from a plant fiber can be used. Specifically, although the organic fibrous filler is not limited thereto, cellulose, cellulose fiber, cellulose nanofiber, lignocellulose, lignocellulose fiber, lignocellulose nanofiber, pulp, rayon, acetate, cupra, cotton, hemp, jute fiber, and the like can be used. Among them, from the viewpoint that the surface structure is stable and easily modified, celluloses can be suitably used, and these fibrous fillers derived from a plant fiber may be mixed.

The length of the fibrous filler may be 50 nm or more and 500 µm or less. When the length is less than 50 nm, the fibrous filler severely aggregates, and becomes difficult to disperse during thermally melting and mixing. When the length is more than 500 µm, the composition has an excessively high viscosity during thermally melting, and becomes difficult to mold. From the viewpoint of achieving both suppression of aggregation and suppression of viscosity increase, the length is further preferably 100 nm or more and 100 µm or less.

The organic fibrous filler may be surface-modified in advance. From the viewpoint of easily reacting with the maleic anhydride structure-containing additive, alkoxysilanes such as an epoxy group-containing alkoxysilane and an amino group-containing alkoxysilane can be used as a surface modifier.

As the surface modification method, the surface modification can be performed by a method of dispersing the organic fibrous filler in a solvent such as water or alcohol to obtain a dispersion, adding dropwise the alkoxysilane in a predetermined amount into the dispersion while stirring the same, and then heating the dispersion in a heating furnace to volatilize the solvent; a method of stirring and mixing the organic fibrous filler and the alkoxysilane in a known dry blending apparatus such as a Henschel mixer; or the like. The amount of the alkoxysilane to be used for surface modification is not limited, but may be 0.1 wt% or more and 2 wt% or less with respect to the weight of the organic fibrous filler. When the amount is less than 0.1 wt%, the amount of the alkoxysilane is too small, and the effect of reacting with the maleic anhydride structure-containing additive due to surface modification is not sufficient. When the amount is more than 2 wt%, alkoxysilanes may react with each other to generate aggregates, thereby becoming a factor of inhibiting uniform dispersion of the organic fibrous filler. When an organic fibrous filler whose surface is modified with an epoxy group or an amino group is used as described above, the epoxy group or the amino group easily reacts with the ring-opened structure of the maleic anhydride structure in the maleic anhydride structure-containing additive as described above, and the strength can be further increased as compared with the case of using an organic fibrous filler that is not surface-modified.

### <Maleic anhydride structure-containing additive>

The maleic anhydride structure-containing additive is not limited as long as it has at least one maleic anhydride structure in one molecule. The maleic anhydride structure-containing additive is not limited to those described above. A maleic anhydride structure is ring-opened, and the ring-opened structure reacts with the thermoplastic resin, while another maleic anhydride structure included in the same molecule in which the above maleic anhydride structure is included is ring-opened, and the ring-opened structure reacts with a hydroxyl group on the organic fibrous filler, so that the thermoplastic resin and the organic fibrous filler are chemically bonded to each other, and the thermoplastic resin and the organic fibrous filler firmly adhere to each other, and the strength of the composite, that is, the resin composition, is improved. Examples of the maleic anhydride structure-containing material that functions in this manner include a maleic anhydride-styrene copolymer, a maleic anhydride-vinyl acetate copolymer, a maleic anhydride-vinyl benzoate copolymer, poly(ethylene-alt-maleic anhydride), polypropylene-graft-maleic anhydride, poly (isobutylene-alt-maleic anhydride), poly(methylvinyl ether-alt-maleic anhydride), polystyrene-block-poly(ethylene-ran-butylene)-block-polystyrene-graft-maleic anhydride, (-)-2,3-bis[(2R,5R)-2,5-dimethylphosphorano]maleic anhydride, citraconic anhydride, and cyclobutane-1,2,3,4-tetracarboxylic dianhydride.

The amount of the maleic anhydride structure-containing material to be added can be 0.5 wt% or more and 7 wt% or less with respect to the total weight of the resin composition, depending on the blending ratio of the organic fibrous filler with respect to the resin composition. When the amount is less than 0.5 wt%, the effect of improving strength cannot be sufficiently obtained. When the amount is more than 7 wt%, the maleic anhydride structure that does not form a ring-opening structure and reacts with neither the organic fibrous filler nor a part of the thermoplastic resin is included in a large amount. The non-reactive maleic anhydride structure becomes a foreign substance that does not function, and the foreign substance may serve as a starting point that causes cracks, which is not preferable. From the viewpoint that the maleic anhydride structure reacts with the organic fibrous filler or the thermoplastic resin in an appropriate amount, the amount is more preferably 1.25 wt% or more and 5 wt% or less.

### <Method for producing resin composition>

As the method for producing a resin composition according to the exemplary embodiment, the thermoplastic resin, the organic fibrous filler, and the maleic acid structure-containing additive are mixed in a predetermined amount to obtain a mixture, and the mixture is thermally melted and mixed and then cooled. Thus, the resin composition can be produced. The mixing method includes: a method of weighing each composition in a container, a bag, or the like, and manually mixing the composition using a spatula or a bar-shaped jig that can be used for stirring; and a method of substantially uniformly mixing the composition using a rotary mixer such as a Henschel mixer. From the viewpoint of easily performing the above mixing step, the thermoplastic resin and the maleic acid structure-containing substance are preferably powder-like or pellet-like. The powder mixture that has been substantially uniformly mixed can be thermally melted and mixed by using a uniaxial kneader, a biaxial kneader, a roll kneader, a kneader, a Banbury mixer, or the like, and can be thermally melted and mixed by a combination thereof. After thermally melted and mixed, the mixture is cooled to a temperature at which the mixture can be pulverized. Thus, the resin composition according to the present disclosure can be obtained. In addition, other additives such as a pigment and a flame retardant can be appropriately added to the mixture to be thermally melted and mixed according to the application.

When the resin composition produced in this manner is molded and applied to, for example, industrial parts, a molded body excellent in both environmental compatibility and strength can be obtained, where the molded body is formulated with an organic fibrous filler to have a higher biomass degree than a conventional resin molded body, thereby contributing to the reduction of environment load, and at the same time, the strength is maintained by a crosslinking reaction between the organic fibrous filler and the thermoplastic resin.

Hereinafter, Examples 1 to 15 and Comparative Example will be specifically described.

### (Example 1)

### <Production of resin composition>

Prepared were 43.9 parts by weight of nylon 6, which is a kind of polyamide, as the thermoplastic resin, 55 parts by weight of the cellulose fiber (Nippon Paper Industries Co., Ltd. (KC FLOCK (W-100G))) as the organic fibrous filler, and 1.1 parts by weight of polypropylene-graft-maleic anhydride as the maleic anhydride structure-containing additive. These were put into one polyethylene container and stirred and mixed manually for 5 minutes using a spatula. Further, the mixture was thermally melted and mixed while being sequentially charged into a hopper portion of a biaxial kneader set at 260°C and being extruded at a shaft rotation speed of 100 rpm, and the melted mixture was recovered from the discharge port to obtain a resin composition according to Example 1.

### <Molecular structure analysis of resin composition>

The molecular structure of the resin composition was analyzed by AFM-IR measurement. A resin composition piece sliced with a microtome for TEM observation was observed with an optical microscope to determine an observation spot, and an AFM image and a reflection infrared absorption spectrum were measured at the spot, thereby analyzing the structure of the nano region.

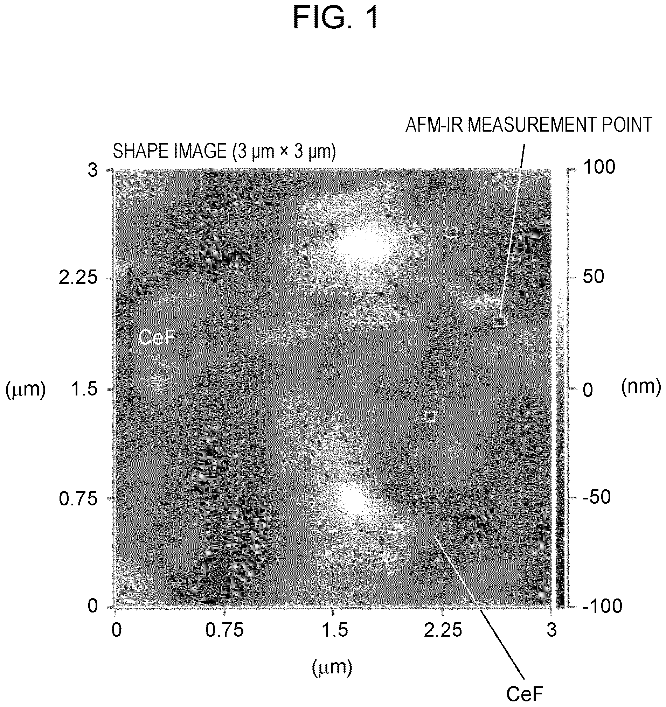

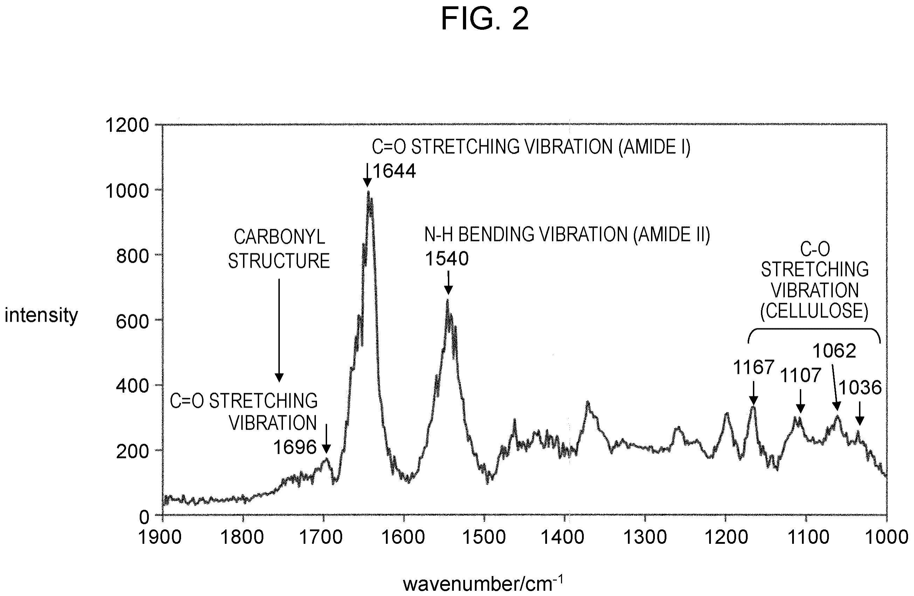

Fig. 1 is a view showing an example of AFM image of a resin composition in Example 1. Fig. 2 is a view showing an example of AFM-IR measurement spectrum of a resin composition in Example 1. First, in the AFM image, the boundary between the maleic anhydride structure-containing additive and the resin is not clear. Therefore, it is found that the maleic anhydride structure-containing additive has chemically reacted. Further, it is found that the polyamide resin is impregnated between fibers of the cellulose fiber, and from Fig. 2, a peak of a carbonyl group not derived from the polyamide, which is a raw material resin, is confirmed in the resin phase. These features are formed by the following mechanisms. That is, in the step of thermally melting and mixing, a maleic anhydride structure in a polypropylene-graft-maleic anhydride is ring-opened, and the ring-opened structure reacts with a hydroxyl group on the surface of the cellulose fiber. Furthermore, in the polypropylene-graft-maleic anhydride having the above maleic anhydride structure, the ring-opened structure of another maleic anhydride structure in the molecule reacts with an amino group at the polymer chain terminal of the polyamide. Thus, the cellulose fiber and the polyamide are chemically bonded to improve compatibility, and the polyamide resin is impregnated between fibers of the cellulose fiber. The carbonyl group not derived from the polyamide confirmed in the spectrum by AFM-IR measurement results from an ester bond generated by the ring-opened structure of the maleic anhydride structure-containing additive, indicating that the cellulose fiber and the polyamide are chemically bonded with each other.

### (Example 2)

Example 2 was carried out in the same manner as Example 1 except that an epoxy surface-modified organic fibrous filler was used as the organic fibrous filler. The epoxy surface-modified organic fibrous filler was produced by the following method.

### <Production of surface-modified organic fibrous filler>

In the example, the organic fibrous filler was a surface-modified organic fibrous filler, and the surface modification was performed with an epoxy group-containing alkoxysilane.
(1) Prepared were 1000 parts by weight of a cellulose fiber (Nippon Paper Industries Co., Ltd. (KC FLOCK (W-100G))) as the organic fibrous filler, and 50 parts by weight of 3-glycidoxypropyltrimethoxysilane (Shin-Etsu Chemical Co., Ltd. KBM403) as the epoxy group-containing alkoxysilane.
(2) The cellulose fiber was charged in a Henschel mixer, and 3-glycidoxypropyltrimethoxysilane was charged in a syringe.
(3) While stirring the cellulose fiber in the Henschel mixer at a rotation speed setting of 1000 rpm, the needle of the syringe was inserted through the syringe hole provided in the lid of the Henschel mixer to inject 3-glycidoxypropyltrimethoxysilane thereinto.
(4) After injecting the same, rotation was further continued for 10 minutes. After rotation was terminated, the epoxy surface-modified cellulose fiber was recovered from the inside of the Henschel mixer.

### (Example 3)

Example 3 was carried out in the same manner as Example 2 except that 68.9 parts by weight of nylon 6 as the thermoplastic resin, and 30 parts by weight of the epoxy surface-modified cellulose fiber as the organic fibrous filler were prepared.

### (Example 4)

Example 4 was carried out in the same manner as Example 2 except that 8.9 parts by weight of nylon 6 as the thermoplastic resin, and 90 parts by weight of the epoxy surface-modified cellulose fiber as the organic fibrous filler were prepared.

### (Example 5)

Example 5 was carried out in the same manner as Example 2 except that 43.9 parts by weight of nylon 66, which is a kind of polyamide, were prepared as the thermoplastic resin.

### (Example 6)

Example 6 was carried out in the same manner as Example 2 except that 44.5 parts by weight of nylon 6 as the thermoplastic resin, and 0.5 parts by weight of polypropylene-graft-maleic anhydride as the maleic anhydride structure-containing additive were prepared.

### (Example 7)

Example 7 was carried out in the same manner as Example 2 except that 38.0 parts by weight of nylon 6 as the thermoplastic resin, and 7.0 parts by weight of polypropylene-graft-maleic anhydride as the maleic anhydride structure-containing additive were prepared.

### (Example 8)

Example 8 was carried out in the same manner as Example 2 except that 43.75 parts by weight of nylon 6 as the thermoplastic resin, and 1.25 parts by weight of polypropylene-graft-maleic anhydride as the maleic anhydride structure-containing additive were prepared.

### (Example 9)

Example 9 was carried out in the same manner as Example 2 except that 40.0 parts by weight of nylon 6 as the thermoplastic resin, and 5.0 parts by weight of polypropylene-graft-maleic anhydride as the maleic anhydride structure-containing additive were prepared.

### (Example 10)

Example 10 was carried out in the same manner as Example 1 except that poly(isobutylene-alt-maleic anhydride) was used as the maleic anhydride structure-containing additive.

### (Example 11)

Example 11 was carried out in the same manner as Example 1 except that an amino surface-modified cellulose fiber (Nippon Paper Industries Co., Ltd. (KC FLOCK (W-100G))) was used as the organic fibrous filler. The amino surface-modified cellulose fiber was produced in the same manner as the surface-modified organic fibrous filler was produced in Example 2, where 3-aminopropyltrimethoxysilane (Shin-Etsu Chemical Co., Ltd. KBM 903) was used as the amino group-containing alkoxysilane.

### (Comparative Example 1)

Comparative Example 1 was carried out in the same manner as Example 1 except that 45 parts by weight of nylon 6 as the thermoplastic resin, and 55 parts by weight of the cellulose fiber (Nippon Paper Industries Co., Ltd. (KC FLOCK (W-100G)) as the organic fibrous filler were prepared, and the maleic anhydride structure-containing additive was not added.

The molecular structure of the resin composition was analyzed in the same manner as in Example 1.

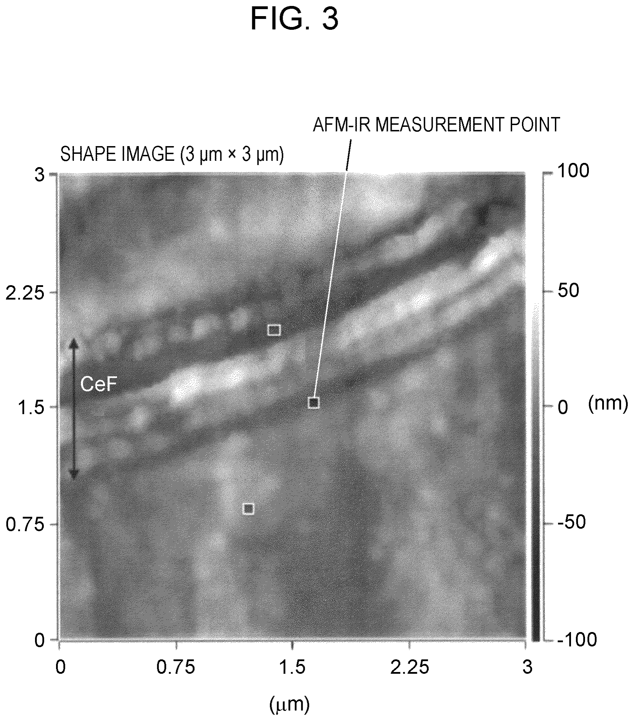

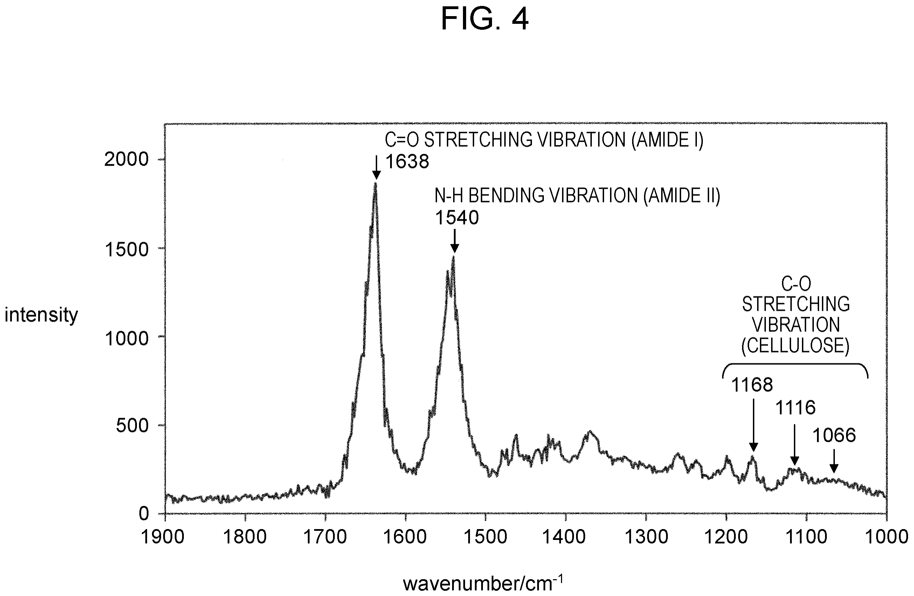

Fig. 3 is a view showing an example of AFM image of a resin composition in Comparative Example 1. Fig. 4 is a view showing an example of AFM-IR measurement spectrum of a resin composition in Comparative Example 1. That is, in Fig. 3, the boundary between the cellulose fiber and the resin is confirmed, and the AFM-IR measurement spectrum at the interface is shown in Fig. 4. In Example 1, at the boundary between the cellulose fiber and the resin, a broad peak not derived from amide, which is specific to a carbonyl group derived from an ester bond, was confirmed as described above. However, such a peak was not confirmed in Fig. 4. Therefore, it was found in Comparative Example that the structure directly bonding the resin and the cellulose fiber as confirmed in Example 1 was not generated.

### (Example 12)

Example 12 was carried out in the same manner as Example 1 except that 73.9 parts by weight of nylon 6 as the thermoplastic resin, and 25 parts by weight of the epoxy surface-modified cellulose fiber as the organic fibrous filler were prepared.

### (Example 13)

Example 13 was carried out in the same manner as Example 1 except that 6.9 parts by weight of nylon 6 as the thermoplastic resin, and 92 parts by weight of the epoxy surface-modified cellulose fiber as the organic fibrous filler were prepared.

### (Example 14)

Example 14 was carried out in the same manner as Example 1 except that 44.7 parts by weight of nylon 6 as the thermoplastic resin, and 0.3 parts by weight of polypropylene-graft-maleic anhydride as the maleic anhydride structure-containing additive were prepared.

### (Example 15)

Example 15 was carried out in the same manner as Example 1 except that 36.0 parts by weight of nylon 6 as the thermoplastic resin, and 9.0 parts by weight of polypropylene-graft-maleic anhydride as the maleic anhydride structure-containing additive were prepared.

### <Molding of resin composition and evaluation of strength>

The resin composition according to the present disclosure can be injection-molded. The resin composition was pulverized with a pulverizer to form pellets, and the prepared pellets were used to prepare a dumbbell test piece of the resin composition with an injection molding machine (180AD, manufactured by The Japan Steel Works, Ltd.). The preparation conditions of the dumbbell test piece included a resin temperature of 240°C, a mold temperature of 80°C, an injection speed of 60 mm/s, and a holding pressure of 100 MPa. Regarding the shape of the test piece, a dumbbell test piece of JIS K7139 dumbbell type test piece type A was prepared for measuring elastic modulus and elongation at break. The test piece of the resin composition thus obtained was evaluated by the following method.

### (Evaluation of elastic modulus)

The obtained dumbbell test piece was subjected to a three-point bending test. The evaluation items in the three-point bending test include:
- elastic modulus determined from strain amount and inclination of bending stress · elongation at break indicating strain amount until fracture. Each item was evaluated as follows.

### (Elastic modulus)

An elastic modulus of 8.5 GPa or more was rated as A, indicating a particularly high elastic modulus; 8.0 GPa or more and less than 8.5 GPa was rated as B, indicating a high elastic modulus; and less than 8.0 GPa was rated as C.

### (Evaluation of elongation at break)

In the three-point bending test of the obtained dumbbell test piece, an elongation until fracture, that is, an elongation at break of 1.9% or more was rated as A, indicating a particularly high elongation at break; 1.7% or more and less than 1.9% was rated as B, indicating a high elongation at break; and less than 1.7% was rated as C.

### (Overall evaluation)

Each of Examples and Comparative Example was evaluated overall, as follows:
· when both of elastic modulus and elongation at break are A, the resin composition was rated as A, indicating particularly excellent strength;
· when not both of elastic modulus and elongation at break are A but neither of them is C, the resin composition was rated as B, indicating excellent strength;
· when either of elastic modulus and elongation at break is B or more, the resin composition was rated as C; and
· when both of elastic modulus and elongation at break are C or less, the resin composition was rated as D, indicating poor strength. In the overall evaluation, A means Excellent, B means Good, C means OK, and D means Not Applicable.

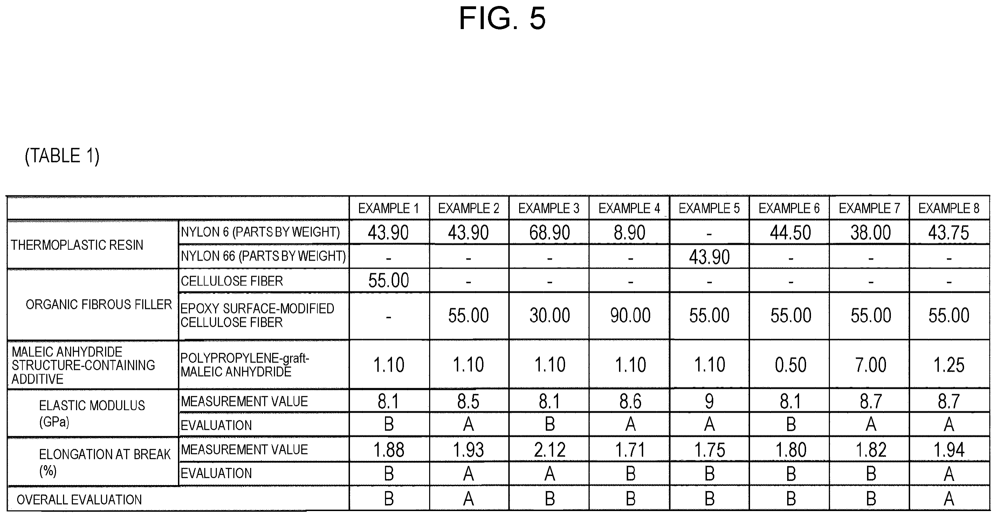

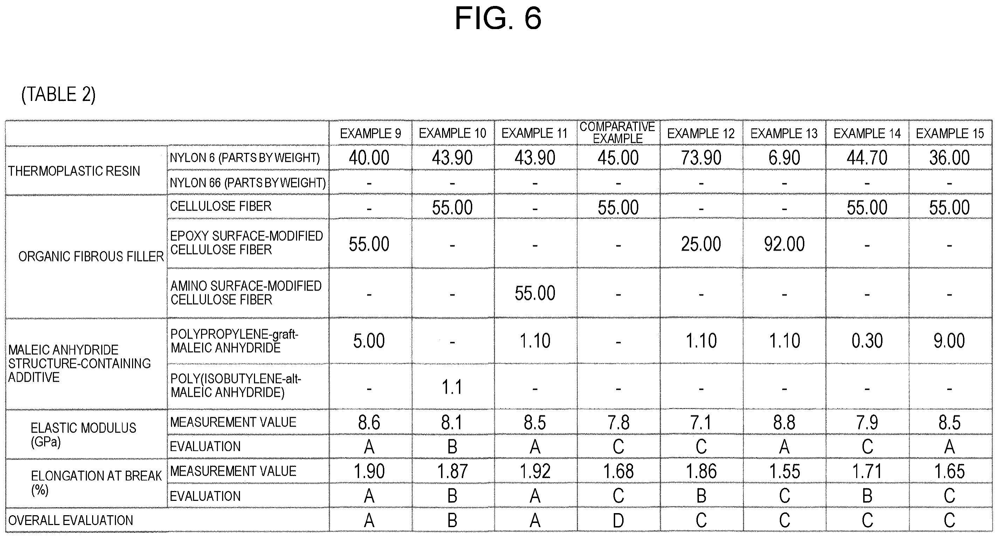

Table 1 in Fig. 5 shows the parts by weight of each raw material and evaluation results in Examples 1 to 8. Table 2 in Fig. 6 shows the parts by weight of each raw material and evaluation results in Examples 9 to 15 and Comparative Example.

Comparison between Example 1 and Comparative Example 1 shows that, when a maleic anhydride structure-containing material is added, the resin composition has excellent strength, whose elastic modulus and strength at break are both increased.

Example 1, Example 2, and Example 11 show that, when a maleic anhydride structure-containing material is added and the surface of the cellulose fiber is appropriately modified, the effect is further remarkably exhibited, and the resin composition has still excellent strength.

The results of Example 3, Example 4, Example 12, and Example 13 show that the organic fibrous filler is preferably added in an amount of 30 wt% or more and 90 wt% or less, and the resin composition has excellent strength.

Example 2 and Example 5 show that the resin applicable in the present disclosure can increase strength regardless of the type of polyamide.

Example 6, Example 7, Example 8, Example 9, Example 14, and Example 15 show that the maleic anhydride structure-containing material may be added in an amount of 0.5 wt% or more and 7 wt% or less, and particularly preferably in an amount of 1.25 wt% or more and 5 wt% or less.

Example 1 and Example 10 show that two or more maleic anhydride structure-containing materials can be used.

### INDUSTRIAL APPLICABILITY

As described above, the resin composition according to the present disclosure has excellent strength and can be applied to various industrial products with environmental compatibility.

## Claims

1. A resin composition comprising: an organic fibrous filler; and a thermoplastic resin, the thermoplastic resin and the organic fibrous filler being chemically bonded to each other,
wherein a chemical bond between the thermoplastic resin and the organic fibrous filler includes a carbonyl group that is not based on the thermoplastic resin.

2. The resin composition according to Claim 1, wherein the carbonyl group is a part of an ester bond.

3. The resin composition according to Claim 1 or 2, wherein the organic fibrous filler is a cellulose fiber.

4. The resin composition according to Claim 3, wherein the cellulose fiber is included in a weight content of 30 wt% or more and 90 wt% or less in the entire resin composition.

5. The resin composition according to Claim 1, wherein the thermoplastic resin is a polyamide.

6. A method for producing a resin composition, the method comprising:
a step of powder-mixing a thermoplastic resin, an organic fibrous filler, and a maleic anhydride structure-containing additive agent to obtain a powder mixture; and
a step of thermally melting, and simultaneously stirring and kneading, the powder mixture to obtain a resin composition.

7. The method according to Claim 6, wherein, in the step of obtaining a resin composition, the maleic anhydride structure-containing additive agent undergoes ring-opening of a maleic anhydride structure to induce a reaction that generates a chemical bond having an ester bond including a carbonyl group between the thermoplastic resin and the organic fibrous filler.

8. A method for producing a resin composition, the method comprising:
a step of powder-mixing an organic fibrous filler and an epoxy group-containing alkoxysilane to produce an epoxy group-modified organic fibrous filler;
a step of powder-mixing a thermoplastic resin, the epoxy group-modified organic fibrous filler, and a maleic anhydride structure-containing additive agent to obtain a powder mixture; and
a step of thermally melting, and simultaneously stirring and kneading, the powder mixture to obtain a resin composition.

9. The method according to Claim 8, wherein, in the step of obtaining a resin composition, the maleic anhydride structure-containing additive agent undergoes ring-opening of a maleic anhydride structure to induce a reaction that generates a chemical bond having an ester bond including a carbonyl group between the thermoplastic resin and the epoxy group-modified organic fibrous filler.
